# EUROPÄISCHE PATENTSCHRIFT

(11) **EP 1 159 930 B1**
(45) Veröffentlichungstag und Bekanntmachung des Hinweises auf die Patenterteilung: **21.09.2005**
(21) Anmeldenummer: 01110874.3
(22) Anmeldetag: 04.05.2001
(51) Int. Cl.: A61C 5/02

(54) **Wurzelkanalinstrument**
Endodontic instrument
Instrument canalaire pour endodontie

(30) Priorität: 29.05.2000 DE 10026593
(43) Veröffentlichungstag der Anmeldung: 05.12.2001
(73) Patentinhaber: Gebr. Brasseler GmbH & Co. KG, D-32631 Lemgo (DE)
(72) Erfinder: Hagemann, Frank, 32657 Lemgo (DE)
(74) Vertreter: Weber, Joachim

(56) Entgegenhaltungen:
- DE-A- 2 009 224
- DE-C- 3 922 004
- US-A- 4 044 468
- US-A- 4 321 040
- US-A- 5 775 903

## Beschreibung

Die Erfindung bezieht sich auf ein Wurzelkanalinstrument nach dem Oberbegriff des Anspruches 1.

Wurzelkanalinstrumente der beschriebenen Art sind aus dem Stand der Technik in unterschiedlichsten Ausgestaltungen bekannt. Hierbei weisen die Handgriffe zylindrische, ballige oder in ihrem mittleren Bereich verjüngte Formen auf.

Bei Wurzelkanalinstrumenten ist es erforderlich, dass der behandelnde Zahnarzt dieses feinfühlig einsetzen kann. Da üblicherweise mit Handschuhen gearbeitet werden muss, muss der Handgriff so ausgebildet sein, dass er sowohl sicher greifbar als auch in einfacher Weise drehbar ist.

Der Zahnarzt greift somit den Handgriff des Wurzelkanalinstruments mit zwei Fingern und bringt das Wurzelkanalinstrument durch Verschieben der Finger in Drehung oder in eine Stoßende-Ziehende-Bewegung. Dies muss zur Wurzelkanalbehandlung im Mund des Patienten erfolgen. Hierdurch wird die Dimensionierung des Handgriffs vorgegeben, er darf nicht zu klein sein, um ausreichend gegriffen werden zu können. Andererseits ist auch die maximale Größe durch den zur Verfügung stehenden Platzbedarf und durch den erforderlichen Blickkontakt begrenzt.

Die vorbekannten Wurzelkanalinstrumente weisen jeweils Handgriffe auf, welche nicht in optimaler Weise gehandhabt oder gegriffen werden können.

Die den nächstkommenden Stand der Technik DE 20 09 224 A beschreibt ein Wurzelkanalinstrument, bei welchem die Mantelfläche des Griffs eine konvexe Krümmung aufweist. Auf der Mantelfläche sind in axialer Richtung verlaufende Stege vorgesehen, welche wiederum an ihrer Oberseite eine konkav gekrümmte Oberfläche besitzen. Die Stege sind zum einen nicht in optimaler Weise durch den Zahnarzt greifbar, zum anderen ergeben sich Probleme hinsichtlich der Reinigungsmöglichkeit des Wurzelkanalinstruments.

Der Erfindung liegt die Aufgabe zugrunde, ein Wurzelkanalinstrument der eingangs genannten Art zu schaffen, welches bei einfachem Aufbau und einfacher, kostengünstiger Herstellbarkeit eine sichere Bedienbarkeit aufweist und einfach zu reinigen ist.

Erfindungsgemäß wird die Aufgabe durch die Merkmale des Hauptanspruchs gelöst, die Unteransprüche zeigen weitere vorteilhafte Ausgestaltungen der Erfindung.

Bei dem erfindungsgemäßen Wurzelkanalinstrument ist somit vorgesehen, dass in dem mittleren Bereich, der einen geringeren Durchmesser aufweist, mehrere Noppen ausgebildet sind.

Durch die erfindungsgemäß vorgesehenen Noppen wird die Treffsicherheit des Handgriffes ganz erheblich gesteigert. Zugleich vermindert sich die Gefahr, dass der Handgriff dem Zahnarzt entgleitet oder von seinen Fingern abrutscht.

Die erfindungsgemäß vorgesehenen Noppen sind einfach und kostengünstig herstellbar, insbesondere bei einem aus einem Kunststoffmaterial gefertigten Handgriff.

Weiterhin ist es erfindungsgemäß auf besonders einfache Weise möglich, durch die Zahl und Ausgestaltung der Noppen den jeweiligen Einsatzbedingungen Rechnung zu tragen.

Die Noppen führen zu erhöhter Griffsicherheit, insbesondere beim Tragen von OP-Handschuhen, ohne dass die Gefahr besteht, dass diese durch den Handgriff beschädigt werden.

Durch die Anordnung der Noppen im mittleren Bereich des Handgriffs stehen diese nicht über eine zylindrische, den gesamten Handgriff einschließende Hüllkurve über. Der Handgriff des Wurzelkanalinstruments kann somit problemlos in Hand- oder Winkelstücke eingespannt werden, mit denen Wurzelkanalinstrumente maschinell gedreht beziehungsweise bewegt werden können.

Die erfindungsgemäß vorgesehene Ausgestaltung der Noppen verbessert das taktile Empfinden des behandelnden Zahnarztes, so dass er das Wurzelkanalinstrument sowohl sicherer drehen als auch in Axialrichtung hin- und herbewegen kann.

Erfindungsgemäß können die Noppen entweder teilkugelförmig oder kegelstumpfförmig ausgebildet sein. Es ergeben sich jedoch noch weitere Abwandlungen bei der Ausgestaltung der Noppen.

Erfindungsgemäß ist vorgesehen, dass der Übergangsbereich von der Noppe zu der Grundkontur des Handgriffs abgerundet ist. Ein derartig abgerundeter oder fließender Übergang stellt sicher, dass der Handgriff desinfiziert, gereinigt oder sterilisiert werden kann, ohne dass die Gefahr besteht, dass sich in den Übergangsbereichen Schmutzpartikel oder andere Verunreinigungen halten können.

Bei den üblicherweise verwendeten Handgriffen ist es besonders vorteilhaft, wenn mindestens 10 und maximal 40 Noppen an dem mittleren Bereich des Handgriffs verteilt angeordnet sind.

Die erfindungsgemäß vorgesehenen Noppen können entweder gleichmäßig oder ungleichmäßig am Umfang des mittleren Bereich des Handgriffs verteilt angeordnet sein. Es hat sich herausgestellt, dass es nicht unbedingt notwendig ist, die Noppen gleichmäßig über den Umfang zu verteilen. Hierdurch ergibt sich die Möglichkeit, den Handgriff unter Verwendung kostengünstiger Werkzeuge aus Kunststoff zu spritzen.

Die Anordnung der Noppen kann erfindungsgemäß in unterschiedlichster Weise erfolgen. Diese können in axial oder radial umlaufenden Reihen angeordnet werden. Es ist jedoch auch möglich, die Noppen jeweils versetzt zueinander auf Lücke anzuordnen.

Als besonders günstig hat sich herausgestellt, wenn der Basisdurchmesser der Noppen zwischen 0,5 und 1,5 mm beträgt.

Um die Einspannbarkeit des Handgriffs des Wurzelkanalinstrumentes in ein Hand- oder Winkelstück.zu verbessern, ist es besonders günstig, wenn beidseitig zu dem mittleren Bereich jeweils ein an seinem Umfang zylindrischer Bereich ausgebildet ist. Die sich an den jeweiligen zylindrischen Bereichen anschließenden Freienden des Handgriffs können abgerundet ausgestaltet sein.

Die Höhe der Noppen, das heißt der Betrag, um welchen die Noppen über die Kontur des mittleren Bereichs des Handgriffes überstehen kann in weitem Rahmen variiert werden.

Bei Verwendung kegelstumpfartiger Noppen kann es besonders günstig sein, wenn diese an ihrem Endbereich zumindest geringfügig abgerundet sind.

Im folgenden wird die Erfindung anhand von Ausführungsbeispielen in Verbindungen mit der Zeichnung beschrieben. Dabei zeigt:
Figur 1 eine Teil-Seitenansicht eines Ausführungsbeispiels eines erfindungsgemäßen Wurzelkanalinstruments mit einem Handgriff,
Figur 2 eine Ansicht, analog Figur 1, zur verdeutlichenden Darstellung der Grundkontur des Handgriffs,
Figur 3 eine Teil-Schnittansicht (in Axialrichtung) durch den mittleren Bereich des in den Figuren 1 und 2 gezeigten Handgriffs,
Figur 4 eine Darstellung, analog Figur 3, in abgewandelter Ausgestaltungsform der Noppen,
Figur 5 eine Radial-Schnittansicht durch den mittleren Bereich des in Figur 1 gezeigten Handgriffs und
Figur 6 eine schematische Darstellung der Handhabung des erfindungsgemäßen Wurzelkanalinstruments.

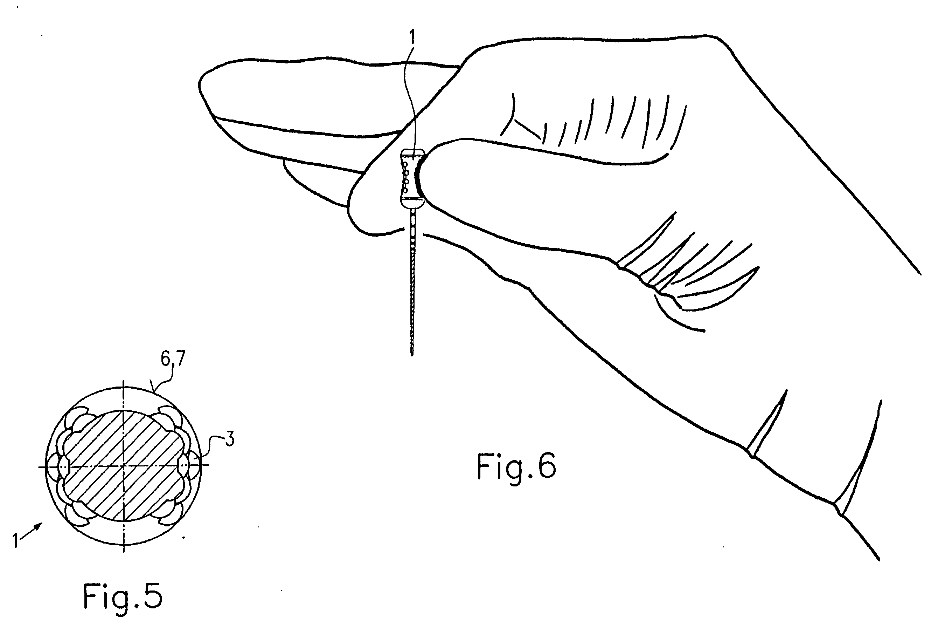

Die Figur 6 zeigt in schematischer Darstellung eine mit einem Handschuh versehene menschliche Hand, welche zwischen Daumen und Zeigefinger einen Handgriff 1 des erfindungsgemäßen Wurzelkanalinstruments hält. Dabei ist ersichtlich, dass die konkave Form des mittleren Bereichs, der einen geringeren Durchmesser aufweist, sich besonders vorteilhaft der Oberflächenform der menschlichen Finger anpasst. Somit ist es möglich, durch eine Bewegung der beiden Finger das Wurzelinstrument in Drehung oder in eine Stoßende-Ziehende-Bewegung zu versetzen.

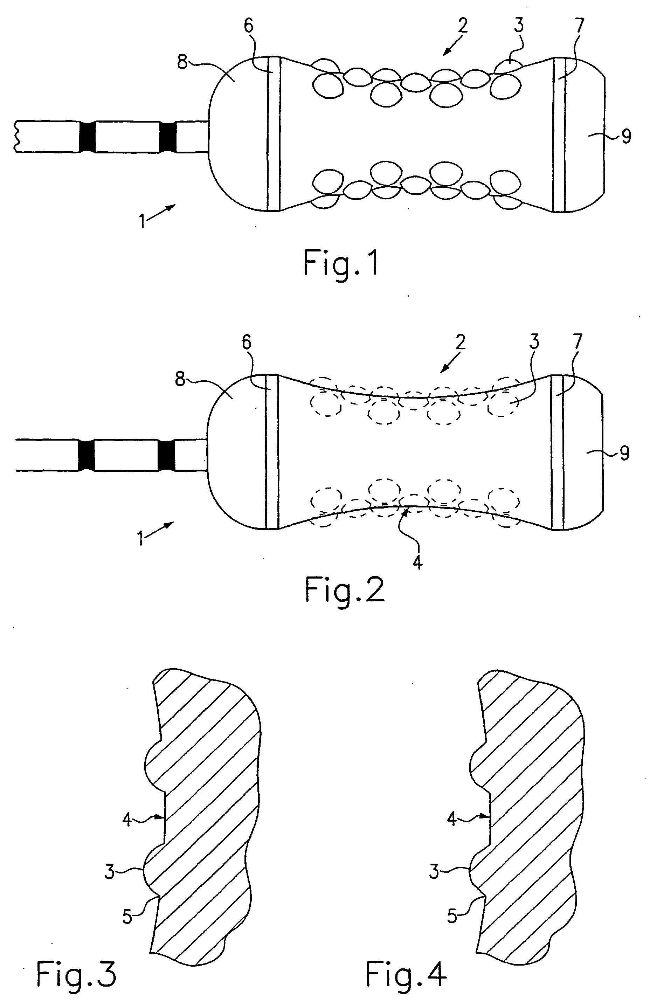

Die Figur 1 zeigt eine vergrößerte Teilansicht des Handgriffs, auf eine Darstellung des Arbeitsbereichs des Wurzelkanalinstrumentes ist verzichtet worden, da dieser dem Stand der Technik entspricht.

Der Handgriff 1 weist zunächst ein abgerundetes, vorderes freies Ende 8 sowie ein abgerundetes, hinteres Ende 9 auf. Angrenzend an die beiden freien Enden 8, 9 ist jeweils ein zylindrischer Bereich 6, 7 vorgesehen, der zur Einspannung des Handgriffs in eine Hand- oder Winkelstück dient.

Ein mittlerer Bereich 2 des Handgriffs 1 ist konkav ausgebildet und weist einen geringeren Durchmesser als die beiden zylindrischenBereich 6, 7 auf.

An dem mittleren Bereich 2 sind mehrere Noppen 3 ausgebildet, die gleichmäßig oder ungleichmäßig am Umfang verteilt sein können. Die in Figur 1 gezeigte Darstellung zeigt in der mittigen Schnittebene keine Noppen. In dieser Ebene kann somit die Trennebene eines Kunststoff-Spritz-Werkzeugs verlaufen.

In Figur 2 ist der in Figur 1 gezeigte Handgriff so dargestellt, dass die Grundkontur 4 des mittleren Bereichs 2 deutlicher sichtbar ist. Die Noppen sind deshalb nur gestrichelt wiedergegeben.

In der Figur 3 ist eine Teil-Schnittansicht des Handgriffs dargestellt. Aus dieser Ansicht ergibt sich, dass die einzelnen Noppen in Form eines Kreissegments oder Kreisabschnitts ausgebildet sind. Der Basisdurchmesser beträgt zwischen 0,5 und 1,5 mm, der fiktive Durchmesser einer die Noppe bildenden Kugel liegt ebenfalls zwischen 0,5 und 1,5 mm.

Ein Übergangsbereich 5 zwischen der Basis des Noppens 3 und der Grundkontur 4 ist fließend oder leicht abgerundet ausgebildet, um die Reinigung des Wurzelkanalinstruments zu erleichtern.

In Figur 4 ist eine abgewandelte Ausgestaltungsform dargestellt, bei welcher die Noppen in Form von Kegelstümpfen ausgebildet sind, deren vorderer Bereich abgerundet ist. Auch ist der Übergangsbereich 5 fließend oder abgerundet ausgestaltet.

Aus der Ansicht der Figur 5 (Schnitt senkrecht zur Längsachse des Wurzelkanalinstruments) ergibt sich nochmals die Anordnung der einzelnen Noppen in mehreren zueinander versetzten Reihen. Aus der Figur 5 ist nochmals der bereits beschriebene, nicht mit Noppen besetzte Mittelbereich ersichtlich.

## Patentansprüche

1. Wurzelkanalinstrument mit einem Handgriff (1), welcher länglich und im wesentlicher rotationssymmetrisch ausgebildet ist und dessen mittlerer Bereich (2) mit einem geringeren Durchmesser versehen ist, **dadurch gekennzeichnet, dass** an dem mittleren Bereich (2) geringeren Durchmessers mehrere Noppen (3) ausgebildet sind, wobei der Übergangsbereich (5) von der Noppe (3) zu der Grundkontur (4) des Handgriffs abgerundet ist.

2. Wurzelkanalinstrument nach Anspruch 1, **dadurch gekennzeichnet, dass** die Noppen (3) teilkugelförmig ausgebildet sind.

3. Wurzelkanalinstrument nach Anspruch 1, **dadurch gekennzeichnet, dass** die Noppen (3) kegelstumpfförmig ausgebildet sind.

4. Wurzelkanalinstrument nach einem der Ansprüche 1 bis 3, **dadurch gekennzeichnet, dass** mindestens 10 Noppen (3) an dem Handgriff (1) vorgesehen sind.

5. Wurzelkanalinstrument nach einem der Ansprüche 1 bis 4, **dadurch gekennzeichnet, dass** maximal 40 Noppen (3) an dem Handgriff (1) vorgesehen sind.

6. Wurzelkanalinstrument nach einem der Ansprüche 1 bis 5, **dadurch gekennzeichnet, dass** Noppen (3) gleichmäßig am Umfang des mittleren Bereichs (2) des Handgriffs (1) verteilt angeordnet sind.

7. Wurzelkanalinstrument nach einem der Ansprüche 1 bis 5, **dadurch gekennzeichnet, dass** die Noppen (3) ungleichmäßig am Umfang des mittleren Bereichs (2) des Handgriffs (1) verteilt angeordnet sind.

8. Wurzelkanalinstrument nach einem der Ansprüche 1 bis 7, **dadurch gekennzeichnet, dass** die Noppen (3) auf Lücke versetzt zueinander angeordnet sind.

9. Wurzelkanalinstrument nach einem der Ansprüche 1 bis 8, **dadurch gekennzeichnet, dass** der Basisdurchmesser der Noppe (3) zwischen 0,5 und 1,5 mm beträgt.

10. Wurzelkanalinstrument nach einem der Ansprüche 1 bis 9, **dadurch gekennzeichnet, dass** beidseitig zu dem mittleren Bereich (2) geringeren Durchmessers jeweils ein an seinem Umfang zylindrischer Bereich (6, 7) ausgebildet ist.

11. Wurzelkanalinstrument nach einem der Ansprüche 1 bis 10, **dadurch gekennzeichnet, dass** das vordere (8) und das hintere (9) freie Ende des Handgriffs abgerundet ist.

## Claims

1. Instrument for the root tooth channel which has a longitudinal handgrip (1) with a substantially rotationally symmetric shape and wherein the median section (2) is of a smaller diameter **characterized in that** the median section of smaller diameter has a plurality of surface pimples (3), the transitional section between the pimples (3) and the base profile (4) of the handgrip being rounded.

2. Instrument for the root tooth channel according to claim 1, **characterised in that** the pimples are in a partial spherical shape.

3. Instrument for the root tooth channel according to claim 1, **characterised in that** the pimples are in a truncated cone shape.

4. Instrument for the root tooth channel according to any of the claims 1 to 3 **characterised in that** at least 10 pimples (3) are provided on the handgrip (1).

5. Instrument for the root tooth channel according to any of the claims 1 to 4 **characterised in that** maxinmim 40 pimples (3) are provided on the handgrip (1).

6. Instrument for the root tooth channel according to any of the claims 1 to 5 **characterised in that** the pimples (3) are evenly spaced apart on the periphery of the median section (2) of the handgrip.

7. Instrument for the root tooth channel according to any of the claims 1 to 5 **characterised in that** the pimples (3) are unevenly spaced apart on the periphery of the median section (2) of the handgrip.

8. Instrument for the root tooth channel according to any of the claims 1 to 7 **characterised in that** the pimples (3) are arranged at intervals from each other.

9. Instrument for the root tooth channel according to any of the claims 1 to 8 **characterised in that** the diameter of the base of the pimples is between 0.5 and 1.5 mm.

10. Instrument for the root tooth channel according to any of the claims 1 to 9 **characterised in that** the cylindrical section of the periphery (6, 7) is arranged on each of the two sides of the median section of smaller diameter (2).

11. Instrument for the root tooth channel according to any of the claims 1 to 10 **characterised in that** the front free end (8) and the rear free end (9) of the handgrip are rounded.

## Revendications

1. Instrument pour canal radiculaire comprenant un élément de préhension (1) allongé et sensiblement symétrique en rotation, et dont la zone médiane (2) présente un diamètre réduit, **caractérisé en ce que** sont formés, sur la zone médiane (2) de diamètre réduit, plusieurs bossages (3); la zone de transition (5) entre le bossage (3) et le contour de base (4) de l'élément de préhension étant arrondie.

2. Instrument pour canal radiculaire selon la revendication 1, **caractérisé en ce que** les bossages (3) présentent une forme de sphère partielle.

3. Instrument pour canal radiculaire selon la revendication 1, **caractérisé en ce que** les bossages (3) présentent une forme tronconique.

4. Instrument pour canal radiculaire selon l'une des revendications 1 à 3, **caractérisé en ce qu'**au moins 10 bossages (3) sont prévus sur l'élément de préhension.

5. Instrument pour canal radiculaire selon l'une des revendications 1 à 4, **caractérisé en ce qu'**au maximum 40 bossages (3) sont prévus sur l'élément de préhension.

6. Instrument pour canal radiculaire selon l'une des revendications 1 à 5, **caractérisé en ce que** les bossages (3) sont répartis régulièrement sur le pourtour de la zone médiane (2) de l'élément de préhension (1).

7. Instrument pour canal radiculaire selon l'une des revendications 1 à 5, **caractérisé en ce que** les bossages (3) sont répartis irrégulièrement sur le pourtour de la zone médiane (2) de l'élément de préhension (1).

8. Instrument pour canal radiculaire selon l'une des revendications 1 à 7, **caractérisé en ce que** les bossages (3) sont disposés en quinconce les uns par rapport aux autres.

9. Instrument pour canal radiculaire selon l'une des revendications 1 à 8, **caractérisé en ce que** le diamètre de base du bossage (3) est compris entre 0,5 et 1,5 mm.

10. Instrument pour canal radiculaire selon l'une des revendications 1 à 9, **caractérisé en ce qu'**une zone (6, 7), cylindrique sur son pourtour, est formée de part et d'autre de la zone médiane (2) de diamètre réduit.

11. Instrument pour canal radiculaire selon l'une des revendications 1 à 10, **caractérisé en ce que** l'extrémité libre avant (8) et l'extrémité libre arrière (9) de l'élément de préhension sont arrondies.
